Europäisches Patentamt

European Patent Office

Office européen des brevets

(11) Veröffentlichungsnummer: **0 101 701**
**B1**

## (12) EUROPÄISCHE PATENTSCHRIFT

(45) Veröffentlichungstag der Patentschrift:
**04.06.86**

(21) Anmeldenummer: **83900713.5**

(22) Anmeldetag: **26.02.83**

(86) Internationale Anmeldenummer:
**PCT/EP 83/00055**

(87) Internationale Veröffentlichungsnummer:
**WO 83/03052 (15.09.83 Gazette 83/21)**

(51) Int. Cl.⁴: **A 61 J 3/00**, A 23 G 3/26

(54) **VORRICHTUNG ZUM ÜBERZIEHEN EINES DRAGIERGUTES.**

Verbunden mit 83101905.4/0088317 (europäische
Anmeldenummer/Veröffentlichungsnummer) *durch
Entscheidung vom 13.07.84.*

(30) Priorität: **05.03.82 DE 3207869**

(43) Veröffentlichungstag der Anmeldung:
**07.03.84 Patentblatt 84/10**

(45) Bekanntmachung des Hinweises auf die Patenterteilung:
**04.06.86 Patentblatt 86/23**

(84) Benannte Vertragsstaaten:
**AT CH DE FR GB IT LI**

(56) Entgegenhaltungen:
**DE - A - 1 441 370
DE - A - 2 029 839
DE - A - 2 517 494
DE - A - 2 731 351
US - A - 3 834 347**

(73) Patentinhaber: **Boehringer Mannheim GmbH, Sandhofer
Strasse 116, D-6800 Mannheim 31 (DE)**

(72) Erfinder: **PREIS, Walter, Daimlerstrasse 2,
D-6840 Lampertheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung zum Überziehen eines Dragiergutes aus Formlingen, wie Tabletten, Pellets, Kapseln und dergl. mit einem um eine Achse drehbaren Kessel, eine Einrichtung zum Besprühen der Formlinge mit einer Dragiersuspension, während die Formlinge in dem Kessel bewegt werden und einer Absaugeinrichtung zum Absaugen von Luft und Drageestaub durch mindestens einen Teil des Dragiergutes hindurch, wobei die Drehachse des Kessels derart geneigt ist, dass das Dragiergut eine dreidimensionale Schlingerbewegung durchführt, bei der das aufsteigende Gut sich im Mittel in einer grösseren Entfernung von der Achse als das ablaufende Gut befindet.

Insbesondere bei der Herstellung von Arzneimitteln, beispielsweise aber auch bei der Produktion von Süssigkeiten, werden geeignete Grundkörper, wie beispielsweise Tabletten, Pellets, Granulate und dergl., die im folgenden zusammenfassend als Formlinge bezeichnet werden, häufig mit einer geeigneten, ungiftigen Substanz, wie beispielsweise Zucker, Schellack oder Gummi arabicum überzogen und oft auch gefärbt. Heute werden als Umhüllungsmaterialien häufig auch Polymere, beispielsweise Methylcellulose oder Acrylharzlacke verwendet. Die überzogenen Formlinge werden als Dragees, bei sehr dünner Beschichtung häufig auch als Filmdragees (in der angelsächsischen Literatur coated tablets) bezeichnet.

Insbesondere an Arzneimitteldragees werden hohe Anforderungen gestellt. Die aufgebrachte Schicht dient beispielsweise dazu, unangenehm schmeckende Arzneimittel mit einer angenehm schmeckenden Hülle zu versehen. Darüberhinaus wird in vielen Fällen durch die Wahl des Dragiermaterials gesteuert, ob sich das Dragee im Magen, im Dünndarm oder erst im Dickdarm auflöst. Insbesondere bei den Filmdragees ist die aufgebrachte Schicht sehr dünn, beispielsweise werden auf eine Tablette von ca. 9 mm Durchmesser nur 10 mg Beschichtung aufgebracht. Es ist ohne weiteres einsichtig, dass unter solchen Umständen die Beschichtung gleichmässig stark und glatt sein muss, damit die Beschichtung ihre Aufgaben erfüllt. Etwaige Rauhigkeiten sind darüberhinaus nicht nur wegen des optischen Eindrucks unerwünscht, sondern sie können auch zu Problemen beim Bedrucken oder Abfüllen der Dragees führen.

Trotz dieser hohen Anforderungen sollen die Dragees in möglichst wirtschaftlicher Weise hergestellt werden, was zu immer grösseren Dragierkesseln führte. Dabei wurden die Schichten der in einem Kessel bewegten Dragees immer dicker und dies führte zu Problemen, einerseits wegen des dadurch erhöhten Abriebs der Formlinge und andererseits dadurch, dass derartig dicke Dragiergutschichten verhältnismässig schwer gleichzeitig oder abwechselnd zu besprühen und mit einem in geeigneter Weise geführten Luftstrom zu trocknen sind.

Um diese Probleme zu vermeiden, wurde bereits eine Vielzahl von Vorschlägen gemacht, die sich im wesentlichen auf die Form der Dragierkessel und auf die Neigung ihrer Drehachse, sowie auf die Führung des Luftstroms erstrecken. Ein guter Überblick über mögliche Formen von Dragierkesseln ist der DE-A-2 731 351 zu entnehmen. Während die Trocknungsluft bei älteren Dragierkesseln häufig einfach durch in den Kessel hineinragende Rohre auf die Oberfläche des Dragiergutes gerichtet und über ebenfalls in den Kessel hineinragende Rohre auch wieder aus diesem abgesaugt wird, so dass sie nur über die Oberfläche der Dragiergutfüllung streicht, sind in dieser Druckschrift auch eine Reihe von Lösungen dargestellt, bei denen der Luftstrom durch mindestens einen Teil des Dragiergutes hindurch geleitet wird. Hierzu wurden beispielsweise verschiedene Formen von Eintauchrohren vorgeschlagen, die beispielsweise als sog. «Tauchschwert» in das im Dargierkessel befindliche Dragiergut hineinragen. Der im Dragiergut befindliche Mündungsbereich ist perforiert und häufig in zwei Zonen eingeteilt, die durch eine Trennwand voneinander getrennt sind, wobei durch die eine Zone Luft unter Druck zugeführt wird, während sie durch die andere Zone agbesaugt wird. Bei einer anderen in der DE-A-2 731 351 dargestellten Dragierkesselform erfolgt die Zuführung der Trocknungsluft in konventioneller Weise über ein über der Dragiergutoberfläche mündendes Rohr. Abgesaugt wird durch die Wandung des Dragierkessels hindurch, der zu diesem Zweck mit einer Perforation versehen ist.

Die Erfindung richtet sich insbesondere auf Dragierkessel, deren Drehachse zur Horizontalen geneigt ist. Solche Kessel haben in der Regel einen birnen-, tulpen- oder zwiebelförmigen Querschnitt. Sie sind üblicherweise einseitig gelagert und haben auf der der Lagerung gegenüberliegenden Seite eine Einfüllöffnung, die während des Betriebs mit einem Deckel verschiebbar sein kann. In einem derartigen Kessel mit einer zur Horizontalen geneigten Drehachse ergibt sich eine relativ komplizierte dreidimensionale Bewegung, die beispielsweise in dem Artikel von K.H. Bauer in «Pharmazeutische Industrie» Bd. 39, 1977, S. 149-156, eingehend beschrieben ist. Aufgrund der Tatsache, dass in diesem Fall die Wirkungsrichtung der Schwerkraft von der der Zentrifugalkraft bzw. der von den Behälterwänden ausgehenden Reibungskraft verschieden ist, wird in einem derartigen Kessel das Dragiergut in seinem am tiefsten liegenden Bereich etwa einer Mantellinie des Dragierkessels folgend als aufsteigendes Gut in Richtung der Kesseldrehung schräg aufwärts transportiert. Dabei erreicht es einen Scheitelpunkt, von dem aus es als ablaufendes Gut entgegen der Drehbewegung des Kessels zurückfliesst. Wegen der Kesselneigung hat das absteigende Gut dabei eine Bewegungskomponente auf die Kesselachse zu, so dass es sich im Mittel näher bei der Kesselachse befindet, als das aufsteigende Gut. Wie auch aus dem zitierten Artikel zu entnehmen ist, wird durch diese dreidimensionale Schlingerbewegung des Dragiergutes eine bessere Durchmischung und damit eine gleichmässigere Beschichtung als bei Verwendung eines Kessels mit horizontaler Drehachse erreicht.

Auch für einen derartigen Kessel ist in der DE-A-2 517 494 bereits eine Absaugeinrichtung vorgeschlagen worden, bei der die Luft durch das Dragiergut hindurchgeführt wird. Zu diesem Zweck ist die Kesselwandung ähnlich wie im zuvor beschriebenen Fall perforiert ausgeführt und die Absaugung erfolgt mit Hilfe eines ausserhalb des Kessels vorgesehenen Absaugrohres, das über eine dicht an die Kesselaussenwand anschliessende Absaugpfanne mit der perforierten Kesselwandung in Verbindung steht.

Diese vorbekannte Einrichtung hat jedoch mehrere Nachteile. Dadurch, dass die Luft praktisch durch die maximale Dicke des Dragiergutes strömen muss, ist der Strömungswiderstand und damit der vom Absaugsystem aufzubringende Unterdruck hoch. Dies wird, wie im Rahmen der vorliegenden Erfindung erkannt wurde, noch dadurch verstärkt, dass die in Wandnähe befindlichen Formlinge im Bereich der Absaugung sich praktisch in Ruhe befinden und in dichter Schüttung an der Perforation anhaften. Nach dem Prinzip des geringsten Widerstandes weicht die Luft diesem Strömungshindernis aus und umströmt zum erheblichen Teil die Dragiergutfüllung. Weiterhin wird durch die perforierte Aussenwandung die Wahrscheinlichkeit einer Beschädigung der Formlinge erhöht und die Reinigung des Kessels erschwert. Konstruktive Probleme ergeben sich daraus, dass die der Luftabsaugung dienende ortsfeste Pfanne gegenüber der Kesselaussenwand abgedichtet werden muss.

Insbesondere bei der Herstellung von Filmdragees stellt der durch Abrieb der Formlinge im Dragiergut vorhandene Staub, wie bereits zuvor angedeutet, ein besonderes Problem dar. Dieser Staub haftet während des Dragiervorgangs in unkontrollierter Weise an den Formlingen an, so dass diese eine rauhe Oberfläche und eine ungleichmässige Beschichtung erhalten. Dadurch erfüllt der Überzug nicht die oben erwähnten hohen Anforderungen. Um diese Rauhigkeiten und Ungleichmässigkeiten durch den Abrieb zu vermeiden, werden die Formlinge vielfach mit einer Vorisolierung versehen, indem man kleine Teilchargen einer Kesselfüllung mit einer entsprechenden Überzugsflüssigkeit übergiesst, die der Bindung des Staubes dient und zu einem besseren Gleiten des Dragiergutes in dem Kessel führt. Dieses Verfahren ist jedoch nicht in allen Fällen durchführbar und darüber hinaus sehr arbeitsaufwendig.

Es ist nun die Aufgabe der vorliegenden Erfindung, unter Vermeidung der zuvor beschriebenen Nachteile eine Vorrichtung zum Überziehen von Dragiergut dahingehend zu verbessern, dass ein gleichmässiger und glatter Überzug erreicht wird. Dies soll in einem Arbeitsgang schnell und rationell möglich sein, wobei die Investitionskosten möglichst niedrig sein sollen.

Zur Lösung dieser Aufgabe wird erfindungsgemäss eine Vorrichtung der eingangs näher bezeichneten Art vorgeschlagen, die dadurch gekennzeichnet ist, dass die Absaugeinrichtung perforierte Trennwände einschliesst, die im Innern des Kessels so angebracht sind, dass sie während der Drehbewegung des Kessels zumindest teilweise vom ablaufenden Dragiergut überströmt werden, und die Luftabfuhr hinter den Trennwänden derart gesteuert ist, dass momentan nicht mit dem Dragiergut in Kontakt stehende Teile der perforierten Trennwände im wesentlichen nicht mit Unterdruck beaufschlagt sind, so dass ein grosser Teil der Luft durch das ablaufende Dragiergut hindurchströmt.

Die Erfindung basiert zu einem wesentlichen Teil auf der Erkenntnis, dass die Wirkung der das Dragiergut durchströmenden Luft, sowohl bezüglich des Trocknungseffektes als insbesondere bezüglich des Absaugens von störendem Staub oder Abrieb besonders gut ist, wenn die Absaugung durch das in einem Dragierkessel mit geneigter Achse in verhältnismässig geringer Schichtdicke und verhältnismässig schnell strömende Gut hindurch erfolgt. Dadurch werden die notwendigen perforierten Trennwände relativ schnell und unter geringem Druck überströmt, wobei die Formlinge eine relativ geringe Packungsdichte haben. Überraschenderweise wird durch diese einfache Massnahme eine praktisch vollständige Entfernung von Abrieb und Staub aus der Dragiergutfüllung erreicht, so dass sich eine völlig glatte Beschichtung ergibt. Darüber hinaus wird durch die erfindungsgemässe Einrichtung eine intensive Trocknung erreicht, die zu einer erheblichen Reduktion der notwendigen Dragierzeiten führt.

Besonders vorteilhaft sind die perforierten Trennwände so angeordnet, dass ein möglichst grosser Teil des ablaufenden Dragiergutes möglichst breitflächig und damit in geringer Schichtdicke über sie hinwegströmt. Dabei spielt es keine wesentliche Rolle, ob ein Teil der perforierten Trennwände sich in bestimmten Betriebszuständen auch in den Bereich des aufsteigenden und sich relativ zur Kesselwandung nur wenig bewegenden Dragiergutes erstreckt, wichtig ist für einen guten Effekt bei möglichst geringem Energieaufwand (der sich im wesentlichen aus der notwendigen Luftmenge und dem zu überwindenden Strömungswiderstand ergibt) nur, dass ein möglichst grosser Teil der von der Absaugeinrichtung geförderten Luft durch einen möglichst grossen Teil des relativ nah bei der Achse des Dragierkessels ablaufenden Dragiergutes gefördert wird.

Besonders bevorzugt sind deshalb die perforierten Trennwände nahe der Trommelachse, insbesondere in Form eines Kegelstumpfes drehfest bezüglich der Trommel montiert. Dadurch drehen sie sich mit der Trommel dem ablaufenden Gut entgegen und durch die resultierende hohe Relativgeschwindigkeit wird die Effektivität der erfindungsgemässen Einrichtung weiter erhöht.

Besonders bevorzugt wird im Zusammenhang mit der erfindungsgemässen Vorrichtung als Einrichtung zum Besprühen der Formlinge mit der Dragiersuspension ein Tauchrohr verwendet, wie es insbesondere in der DE-B-2 029 839 beschrieben wird. Durch dieses Tauchrohr wird der Sprühstrahl mit einem ihn umgebenden Luftstrom in die Menge der Formlinge hineingerichtet, wobei er vorzugsweise in die Hauptbewegungsrichtung der Formlinge gelenkt wird. Bei der kombinierten Verwendung eines Tauchrohres mit der erfindungsgemässen Vorrichtung wird eine besonders schnelle und gleichmässige Dragierung bei geringem Energieaufwand ermöglicht.

Weitere erfindungsgemäss wesentliche konstruktive Massnahmen und die damit erzielten Vorteile sind der folgenden Beschreibung eines Ausführungsbeispiels der erfindungsgemässen Vorrichtung anhand der Figuren zu entnehmen. Es zeigen:

Fig. 1 eine erfindungsgemässe Dragiervorrichtung in seitlicher Aufsicht, teilweise im Schnitt,

Fig. 2 eine stark schematisierte Forntalansicht einer erfindungsgemässen Dragiervorrichtung zur Verdeutlichung von deren Betriebsweise,

Fig. 3 eine bevorzugte Ausführungsform einer Absaugeinrichtung.

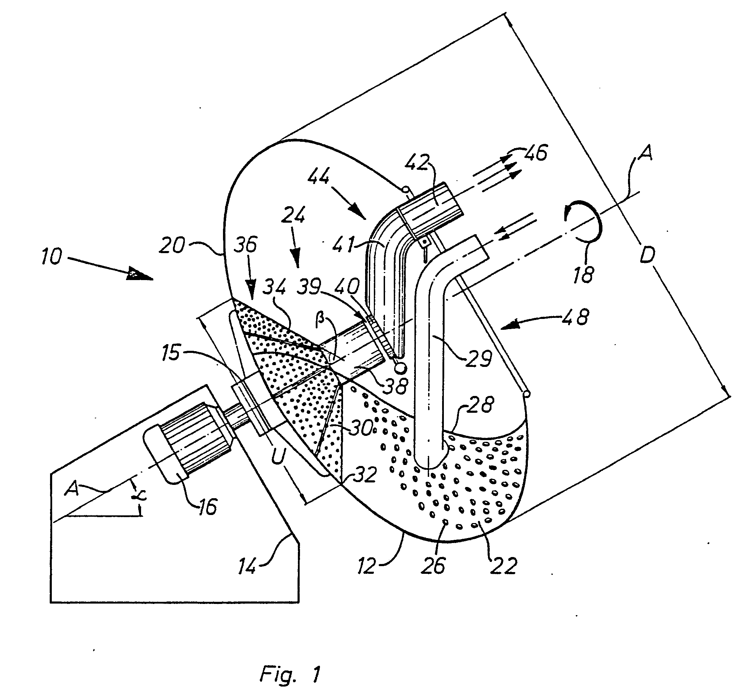

In Fig. 1 erkennt man eine in ihrer Gesamtheit mit dem Bezugszeichen 10 versehene Dragiervorrichtung, deren Hauptbestandteil der zwiebelförmige Kessel 12 ist, der über einen Flansch 15 mit einem Antrieb 16 verbunden ist, der in üblicher Weise aus einem elektrischen Motor und einem Getriebe bestehen kann. Die einseitige Lagerung ist mit 14 bezeichnet. Der Kessel dreht sich im Betrieb in Richtung des Pfeiles 18 um die Achse A, die um einen Winkel α gegen die Horizontale geneigt ist, der im dargestellten Ausführungsbeispiel 30° beträgt.

Die Wandung 20 des Dragierkessels 12 ist im Schnitt dargestellt, so dass man in seinem Innern das Dragiergut 22 und die in ihrer Gesamtheit mit dem Bezugszeichen 24 versehene Absaugeinrichtung erkennen kann. Das Dragiergut 22 besteht aus einer Vielzahl nur schematisch angedeuteter Formlinge 26, die beim Dragiervorgang mit einem Überzug versehen werden. Zu diesem Zweck ist ein Tauchrohr 29 vorhanden, das lediglich schematisch angedeutet ist. Einzelheiten zu dessen Funktionsweise sind der DE-B-2 029 839 zu entnehmen. Mit dem Bezugszeichen 28 ist die Begrenzungslinie des Dragiergutes in der dargestellten Seitenansicht während der Kesselbewegung bezeichnet.

Zu der Absaugeinrichtung 24 gehören perforierte Trennwände 30, die im dargestellten Ausführungsbeispiel konisch um die Rotationsachse herum angeordnet sind. Statt mehrerer glattflächig miteinander verbundener Trennwände 30 kann der Konus bei der dargestellten Konstruktion vorteilhaft auch aus einem Stück perforiertem Blech hergestellt sein, so dass auf seinem gesamten Umfang nur eine Naht notwendig ist. Die Perforation muss so gestaltet sein, dass kesselseitig keine scharfen Kanten vorhanden sind, die die Formlinge 26 beschädigen könnten. Die geeignete Dimensionierung der Löcher 34 in den perforierten Trennwänden 30 lässt sich empirisch bestimmen. Die perforierten Trennwände können auch siebartig, beispielsweise aus sich überkreuzenden Lagen von Drähten aufgebaut sein.

Der untere Umfang 32 des Kegels 36 aus perforierten Trennwänden 30 verläuft bevorzugt kreisförmig um die Achse A und ist mit der Kesselwandung 20 fest verbunden, so dass die Trennwände 30 drehfest zum Kessel 12 mit diesem verbunden sind.

Der Kegelstumpf 36 der perforierten Trennwand 30 geht an seinem oberen Ende in ein zur Achse A koaxiales, mit ihm fest und dicht verbundenes Rohr 38 über, durch das Luft abgesaugt werden kann. An das Rohr 38 schliesst sich über eine Blende 40 ein im dargestellten Fall aus zwei Teilen 41 und 42 bestehendes Absaugrohr 44 an, dass in nicht dargestellter Weise ortsfest montiert ist und zu einer entsprechenden nicht dargestellten Luftfördereinrichtung, beispielsweise einem Mitteldruckventilator führt, durch die die Luft in der durch die Pfeile 46 angedeuteten Weise angesaugt wird. Das Absaugrohr verläuft bei der dargestellten bevorzugten Ausführungsform durch die Einfüllöffnung 48 des Kessels 12 hindurch, der vielfach von einem nicht dargestellten Deckel verschlossen wird, der mit einer entsprechenden Aussparung für das Absaugrohr 44 versehen und ebenfalls ortsfest ist, d.h. sich nicht mit dem Kessel 12 dreht.

Für die vorliegende Erfindung ist nun wesentlich, dass die Luftabfuhr hinter den perforierten Trennwänden 30 derart gesteuert ist, dass nur die Teile der Trennwände, die zu einem gegebenen Zeitpunkt mit Dragiergut 22 im Kontakt stehen, mit Unterdruck beaufschlagt werden, d.h. dass nur durch diese Teile der perforierten Trennwände 30 hindurch die Absaugung erfolgt.

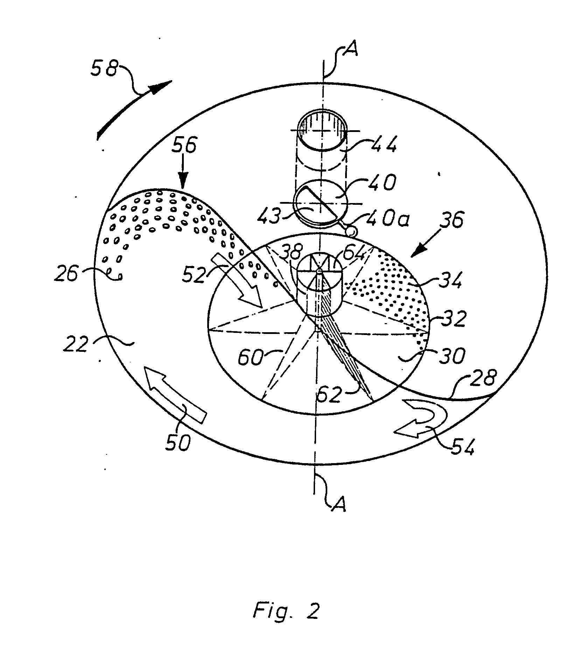

Dies ist in Fig. 2 näher dargestellt, aus der zugleich der typische Verlauf der Dragiergutbewegung in schematisierter Weise zu entnehmen ist. Fig. 2 zeigt in einer schematischen perspektivischen Darstellung den Kegelstumpf 36 der Trennwände 30 mit dem daran befestigten Rohr 38. Darüber erkennt man in einer auseinandergezogenen Darstellung die mit einem Handgriff 40a verstellbare Blende 40, die mit dem Absaugrohr 44 verbunden ist. Die Achse A des lediglich schematisch im Schnitt dargestellten Kessels 12 verläuft in dieser Darstellung schräg aus der Zeichenebene heraus, dergestalt, dass ihre Projektion auf die Zeichenebene senkrecht ist.

Die Pfeile 50, 52 und 54 sollen die für einen Dragierkessel mit schrägliegender Achse typische dreidimensionale Schlingerbewegung des Dragiergutes 22 andeuten. Der Pfeil 50 markiert das aufsteigende Gut, das im wesentlichen einer Mantellinie des Kessels 12 folgend durch die Reibungskräfte zwischen dem Dragiergut 22 und der Kesselwandung 20 nach oben befördert wird, bis es einen mit dem Pfeil 56 angedeuteten Scheitelpunkt erreicht, an dem die Schwerkraft die auf das Dragiergut wirkenden Reibungskräfte überwiegt, was dazu führt, dass das Dragiergut als ablaufendes Gut nach unten fliesst. Wie dem eingangs zitierten Artikel von K.H. Bauer zu entnehmen ist, ist die Schichtdicke des ablaufenden Gutes 52 erheblich geringer als die des aufsteigenden Gutes 50. Das Tauchrohr 29 taucht weitgehend in das ablaufende Gut 52 ein, wobei aus dessen in der Figur nicht sichtbaren Öffnung Dragiersuspension und Luft, wie in der DE-B-2 029 839 beschrieben, in das Dragiergut 22 eingeblasen wird.

Weiterhin ist der Fig. 2 andeutungsweise zu entnehmen, dass das ablaufende Gut bei der Bewegung des Kessels 12 in Richtung des Pfeiles 58 wegen der Schräglage der Achse A eine Komponente auf die Kesselachse A zu hat und sich deswegen im Mittel näher bei der Achse A befindet, als das aufsteigende Gut. Wenn nun, wie in der dargestellten bevorzugten Ausführungsform, die perforierten Trennwände 30 in der Nähe der Achse A angeordnet sind, werden sie zu einem erheblichen Teil von dem ablaufenden Gut 52 überströmt. Da die Trennwände 30 bevorzugt mit dem Kessel 12 drehfest verbunden sind, drehen sie sich dem ablaufenden Gut 52 entgegen, wodurch sich die Relativgeschwindigkeit zwischen ablaufendem Gut 52 und Trennwänden 30 zusätzlich erhöht. Dadurch erfolgt die Absaugung durch ein relativ zu der Perforation 34 sehr schnell, in relativ geringer Schichtdicke und in lockerer Schüttung sich bewegendes Dragiergut 22 hindurch. Dies führt zu einer besonders wirksamen Trocknung der Dragees, wobei gleichzeitig ein Festsetzen der Dragees auf den perforierten Trennwänden 30 vermieden wird und der Energiebedarf wegen der im Vergleich zu den vorbekannten Einrichtungen reduzierten notwendigen Luftmengen und Druckunterschieden erheblich vermindert ist.

Die erfindungsgemässe Steuerung der Luftabfuhr hinter den Trennwänden 30 erfolgt bei der dargestellten bevorzugten Ausführungsform dadurch, dass hinter den perforierten Trennwänden 30, also auf deren von dem Dragiergut 22 abgewandten Seite, sich parallel zu der Drehachse A erstreckende Absperrwände 62 vorgesehen sind, die diese Drehachse sternförmig umgeben und mit dem Kessel 12 drehfest verbunden sind, so dass sie sich mit diesem mitdrehen. Die Absperrwände 62 sind sowohl dem Kesselboden als auch der Mantelfläche des Kegels 36 der Trennwände 30 exakt angepasst. Dadurch bilden sie Absaugkammern 60, die gegeneinander abgedichtet sind.

Die Absperrwände 62 und damit auch die Absaugkammern 60 erstrecken sich in das Rohr 38 hinein. An die Öffnungen 64 der Kammern 60 schliesst sich, nur durch einen sehr kleinen Spalt 39 von beispielsweise 2mm Breite getrennt (vgl. Fig. 1), die verstellbare Blende 40 an. Dieser folgt in der zuvor beschriebenen Weise das Absaugrohr 44 und die Absauganlage, bestehend aus Filtern und einem Ventilator.

Durch diese bevorzugte Konstruktion wird auf einfache Weise erreicht, dass nur von den Teilen der Trennwände 30 Luft abgesaugt wird, die während der Drehbewegung des Kessels 12 von Dragiergut 22 bedeckt sind. Die Grösse dieses Bezirks lässt sich durch entsprechende Gestaltung der Öffnung 43 der Blende 40 und durch die Anzahl und Grösse der Kammern 60 leicht variieren. Durch Verdrehen der Blende 40 lässt sich die Beaufschlagung der Absaugkammern 60 zusätzlich den Verhältnissen entsprechend einstellen. Selbstverständlich gibt es auch eine Reihe anderer möglicher Konstruktionen zur Steuerung der Luftabfuhr hinter den perforierten Trennwänden 30, insbesondere könnte hinter dem Konus 36 eine Absaugpfanne vorhanden sein, die sich unter denjenigen Bereichen der perforierten Trennwände 30 erstreckt, die von dem Dragiergut 22 und insbesondere von dem ablaufenden Gut 52 beaufschlagt werden. Wie weiter oben erwähnt, ist es dabei unschädlich, wenn sich Teile der perforierten Trennwände 30 in einem Bereich befinden, der zum Teil auch von aufsteigendem Gut bedeckt ist. Wichtig ist, dass die Luftströmung in solchen Fällen zum erheblichen Teil, mindestens etwa zur Hälfte, bevorzugt mindestens zu drei Viertel, durch das ablaufende Gut 52 erfolgt.

Bevorzugt ist die Dimensionierung und Formgebung des Kessels 12, die Neigung der Drehachse und die Füllmenge des Dragiergutes 22 so aufeinander abgestimmt, dass das Dragiergut 22 während der Bewegung des Kessels 12 wie in Fig. 2 dargestellt unterhalb der Achse A durchläuft, d.h. die Drehachse verläuft in diesem Fall nicht durch das Dragiergut hindurch. Dadurch ergibt sich ein besonders glatter Verlauf des Dragierguttransportes in dem Kessel 12.

Die Drehachse des Kessels ist bevorzugt um einen Winkel $\alpha$ = 20-40° gegenüber der Horizontalen geneigt. Der in Fig. 1 eingezeichnete Winkel $\beta$ zwischen dem Mantel des Kegelstumpfes 36 und der Drehachse A ist relativ unkritisch. Besonders bewährt haben sich Winkel $\beta$ zwischen 60 und 75°, es sind jedoch auch Konstruktionen möglich, bei denen der Kegel zu einer flachen Scheibe ($\beta$ = 90°) oder im anderen Extrem zu einem Zylinder in Fortsetzung des Rohres 38 ($\beta$ = 0°) entartet.

Der Durchmesser U des Umfangs 32 des Kegelstumpfes 36 beträgt bevorzugt etwa 35-60% des Trommeldurchmessers D, um die Absaugluft optimal zur Wirkung zu bringen. Soweit die perforierten Trennwände 30 nicht kegelstumpfförmig gestaltet sind, sollte sich bevorzugt der Wirkungsbereich der Luftabsaugung entsprechend weit in die Dragiergutfüllung 22 hinein erstrecken.

Die dargestellte bevorzugte Konstruktion zeichnet sich besonders durch einen äusserst einfachen Aufbau und damit günstige Investitionskosten aus. Insbesondere ist zwischen dem sich drehenden Kegelstumpf 36 bzw. dem damit verbundenen Rohr und der Blende 40 keine aufwendige Dichtung notwendig. Die Luftabfuhr erfolgt durch die ohnehin vorhandene Kesselöffnung hindurch, so dass auch hier keine beweglichen Dichtelemente erforderlich sind. Der dargestellte Kessel ist insgesamt glattflächig aufgebaut, so dass er sich im Gegensatz zu den vorbekannten Dragierkesseln mit perforierter Wandung einfach reinigen lässt. Bevorzugt ist der aus den Trennwänden 30 gebildete Kegelstumpf 36 so eingebaut, dass er einfach abgenommen und damit von beiden Seiten gründlich gereinigt werden kann. Schliesslich erlaubt die dargestellte bevorzugte Konstruktion ein Nachrüsten von bereits vorhandenen Dragierkesseln zu einer erfindungsgemässen Vorrichtung.

Die kegelstumpfförmige Konstruktion der perforierten Trennwände 30 oder eine ähnlich glattflächige andere Gestaltung hat weiterhin den Vorteil, dass er auf den Lauf der Formlinge nicht hemmend wirkt und im Gegenteil zu einer äusserst wirksamen Durchmischung des Dragiergutes 22 beiträgt, während bei den vorbekannten Einrichtungen gerade an dieser Stelle, wie dem Fachmann geläufig ist, bei der Zuckerdragierung frisch besprühte Formlinge leicht an der Kesselwand kleben bleiben.

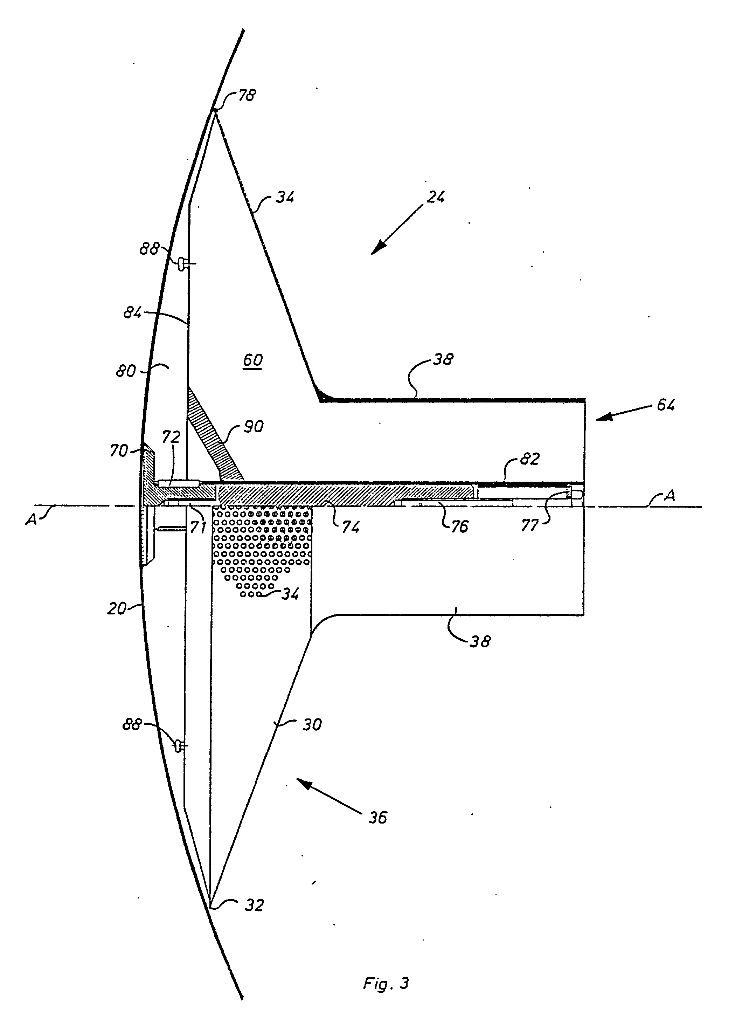

Fig. 3 zeigt eine besonders bevorzugte Ausführungsform einer Absaugvorrichtung 24. Die Kesselwand 20 ist hierbei im Schnitt, die übrigen Teile in der oberen Hälfte der Figur im Schnitt, in der unteren Hälfte als Ansicht dargestellt.

In der Kesselmitte ist ein Zapfen 70 an die Kesselwand 20 angeschweisst. Eine Zapfenverlängerung 74 dient als Einführhilfe und ist mit dem Zapfen 70 bei 71 verschraubt. Sie erstreckt sich als Verlängerung des Zapfens 70 in Richtung der Achse A.

Auf die Zapfenverlängerung 74 ist die Absaugvorrichtung 24 geschoben und mit einer Schraube 76 angezogen, die sich gegen einen Steg 77, der mit dem Rohr 82 74 fest verbunden ist, abstützt. Dabei ist der untere Rand 32 des Kegelstumpfes 36 mittels der Dichtung 78 gegen den Kesselboden abgedichtet, damit keine Formlinge in den Hohlraum 80 gelangen können. Über die Passfedern 72 wird die Drehung des Kessels auf das Rohr 82 übertragen, das über ein konisch ausgebildetes Leitblech 90 mit dem Bodenblech 84 der Absaugeinrichtung 24 fest verbunden ist. Die konische Ausbildung des Leitblechs 90 ist einerseits aus Stabilitätsgründen günstig und vermeidet andererseits scharfe Ecken und Winkel, in die sich grössere Partikel, die durch die der Übersichtlichkeit halber nur teilweise dargestellten Löcher 34 aus dem Dragiergut 22 abgesaugt werden, absetzen könnten. Die Abdichtung der Absaugkammern 60 zum Kesselboden hin wird bei dieser Ausführungsform durch das Bodenblech 84 vorgenommen, das zum Reinigen der von den Formlingen abgewandten Seite der im dargestellten Beispiel einstückig ausgeführten perforierten Trennwand 30 mittels Spreizköpfen 88 leicht entfernt werden kann.

Das Ausführungsbeispiel nach Fig. 3 zeigt besonders deutlich, dass die erfindungsgemässe Einrichtung sich neben den bereits erwähnten Vorteilen durch eine kompakte Bauweise auszeichnet. Dadurch ist sie einerseits leicht von einem Mann auszuwechseln oder, wenn in bestimmten Fällen in dem gleichen Dragierkessel ohne Absaugung gearbeitet werden soll, ganz zu entfernen, andererseits nimmt die erfindungsgemässe Absaugvorrichtung nur einen sehr geringen Anteil des Kesselvolumens ein, so dass dessen Füllvolumen praktisch unverändert bleit.

*Beispiel*

*Dragiertrommel*

| | |
|---|---|
| Form: | zwiebelförmig |
| Fassungsvermögen: | 300 kg |
| Neigung: | 30° |
| Drehzahl: | 18 min$^{-1}$ |
| Durchmesser D: | 1600 mm |

*Konus*

| | |
|---|---|
| Durchmesser U: | 700 mm |
| Lochdurchmesser der Perforation: | 2,5 mm |
| Anzahl der Absaugkammern: | 6 |
| Winkel β: | 60° |

*Abluft*

| | |
|---|---|
| Abluftmenge: | 800 m³/h |
| Druckverlust (ohne Filter und Rohrleitung): | 0,0065 bar |

*Sonstige Versuchsdaten*

| | |
|---|---|
| Tabletteneinlage | 1 Mio Stück = 200 kg |
| Tabl.-Durchmesser: | 8 mm |
| Tabl.-Härte: | 4 kp |
| Sprührate: | 1 90 g/min |
| Sprühdauer: | 1 Std., 45 Min. |

*Versuchsverlauf*

Zu Beginn der Filmdragierung war nur in den ersten 2-5 Minuten etwas Staub zu sehen. Anschliessend war kein Staub mehr festzustellen, auch wenn die Öffnung der Dragiertrommel nicht abgedeckt war. Die beschichteten Formlinge haben danach eine äusserst glatte und glänzende Oberfläche. Die Dragierzeit konnte im Vergleich zu einer Absaugung über dem Dragiergut mit der Vorrichtung auf die Hälfte reduziert werden.

**Patentansprüche**

1. Vorrichtung zum Überziehen eines Dragiergutes (22) aus Formlingen (26) wie Tabletten, Pellets und dergl. umfassend einen um eine Achse (A) drehbaren Kessel (12), eine Einrichtung (29) zum Besprühen der Formlinge (26) mit einer Dragiersuspension, während die Formlinge (26) in dem Kessel (12) bewegt werden und

eine Absaugeinrichtung (24) zum Absaugen von Luft und Drageestaub durch mindestens einen Teil des Dragiergutes (22) hindurch,

wobei die Drehachse (A) des Kessels (12) derart zur Horizontalen geneigt ist, dass das Dragiergut eine dreidimensionale Schlingerbewegung durchführt, bei der das aufsteigende Gut (50) sich im Mittel in einer grösseren Entfernung von der Achse (A) als das ablaufende Gut (52) befindet, dadurch gekennzeichnet,

dass die Absaugeinrichtung (24) eine oder mehrere perforierte Trennwände (30) einschliesst, die im Innern des Kessels (12) so angebracht sind, dass sie während der Drehbewegung des Kessels (12) vom ablaufenden Dragiergut (52) überströmt werden und

die Luftabfuhr hinter den Trennwänden (30) derart gesteuert ist, dass momentan nicht mit dem Dragiergut (22) in Kontakt stehende Teile der perforierten Trennwände (30) im wesentlichen nicht mit Unterdruck beaufschlagt sind,

so dass ein grosser Teil der Luft durch das ablaufende Gut (52) hindurchströmt.

2. Vorrichtung nach Anspruch 1, dadurch gekennzeichnet, dass die Form des Kessels (12), der Neigungswinkel der Drehachse (A) und die bestimmungsgemässe Füllmenge des Kessels (12) so aufeinander abgestimmt sind, dass die Drehachse (A) nicht durch das Dragiergut (22) verläuft.

3. Vorrichtung nach Anspruch 1 oder 2, dadurch gekennzeichnet, dass die Drehachse (A) des Kessels (12) um einen Neigungswinkel α zwischen 20 und 40° gegen die Horizontale geneigt ist.

4. Vorrichtung nach einem der Ansprüche 1-3, dadurch gekennzeichnet, dass die perforierten Trennwände (30) in der Umgebung der Drehachse (A) drehfest bezüglich des Kessels (12) befestigt sind, so dass sie sich mit dem Kessel (12) entgegen dem ablaufenden Gut (52) bewegen und dass hinter den perforierten Trennwänden (30) Absperrwände (62) zur Steuerung der Luftabfuhr vorhanden sind.

5. Vorrichtung nach einem der Ansprüche 1-4, dadurch gekennzeichnet, dass die perforierten Trennwände (30) im wesentlichen kegelförmig um die Drehachse (A) des Kessels (12) ausgebildet sind, wobei der untere Kegelumfang (U) auf der Innenwandung des Kessels (12) kreisförmig um die Achse (A) verläuft und die Absaugeinrichtung (24) ein ebenfalls mit der Drehachse (A) koaxiales Rohr (38) einschliesst, das mit einem durch die Kesselöffnung (48) verlaufenden Absaugrohr (44) in Verbindung steht.

6. Vorrichtung nach Anspruch 5, dadurch gekennzeichnet, dass die Mantellinie der kegelförmigen Anordnung der perforierten Trennwände (30) einen Winkel β von 60-75° zu der Drehachse (A) bildet und dass der Durchmesser (U) des unteren Kegelumfangs (32) 35-60% des Durchmessers (D) des Kessels (12) beträgt.

7. Vorrichtung nach einem der Ansprüche 3-6, dadurch gekennzeichnet, dass der Dragierkessel (12) zwiebelförmig ausgebildet ist, die Drehachse (A)

unter einem Winkel α von etwa 30° zur Horizontalen verläuft und die Luftabfuhr hinter den perforierten Trennwänden (30) so gesteuert ist, dass etwa die Hälfte der Fläche der perforierten Trennwände (30) jeweils mit Unterdruck beaufschlagt ist.

8. Vorrichtung nach einem der Ansprüche 1-7, dadurch gekennzeichnet, dass die Einrichtung zum Besprühen ein Tauchrohr einschliesst.

## Claims

1. Device for the coating of a drageeing material (22) of formed bodies (26), such as tablets, pellets and the like, comprising a kettle (12) rotatable around an axis (A), a device (29) for the spraying of the formed bodies (26) with a drageeing suspension while the formed bodies (26) are moved in the kettle (12) and a suction device (24) for the sucking off of air and dragee dust through at least a part of the drageeing material (22), whereby the axis of rotation (A) of the kettle (12) is tilted to the horizontal in such a manner that the drageeing material undergoes a three-dimensional rolling movement in which the ascending material (50) is present, on average, at a greater distance from the axis (A) than the running off material (52), characterised in that the sucking off device (24) comprises one or more perforated separating walls (30) which are so introduced into the interior of kettle (12) that, during the rotational movement of the kettle (12), running off drageeing material (52) flows thereover and the air removal behind the separating walls (30) is controlled in such a manner that parts of the perforated separating walls (30) momentarily not in contact with the drageeing material (22) are substantially not impinged upon by under-pressure so that a large part of the air flows through the running off material (52).

2. Device according to claim 1, characterised in that the shape of the kettle (12), the angle of tilt of the axis of rotation (A) and the required filling amount of the kettle (12) are so adjusted with regard to one another that the axis of rotation (A) does not run through the drageeing material (22).

3. Device according to claim 1 or 2, characterised in that the axis of rotation (A) of the kettle (12) is tilted to the horizontal by an angle of tilt α of between 20 and 40°.

4. Device according to one of claims 1-3, characterised in that the perforated separating walls (30) are, in the region of the axis of rotation (A), secured fixedly with regard to the kettle (12) so that they move with the kettle (12) counter to the running off material (52) and that, behind the perforated separating walls (30), there are present barrier walls (62) for the control of the air removal.

5. Device according to one of claims 1-4, characterised in that the perforated separating walls (30) are constructed essentially cone-shaped about the axis of rotation (A) of the kettle (12), whereby the lower circumference (U) runs on the inner wall of the kettle (12) circularly around the axis (A) and the suction device (24) includes a pipe (38), which is also coaxial with the axis of rotation (A), which is connected with a suction pipe (44) running through the kettle opening (48).

6. Device according to claim 5, characterised in that the mantle line of the cone-shaped arrangement of the perforated separating walls (30) forms an angle β of 60 to 75° to the axis of rotation (A) and that the diameter (U) of the lower cone circumference (32) amounts to 35-60% of the diameter (D) of the kettle (12).

7. Device according to one of claims 3-6, characterised in that the drageeing kettle (12) is constructed in the shape of an onion, the axis of rotation (A) runs at an angle α of about 30° to the horizontal and the air removal is so controlled behind the perforated separating walls (30) that about half of the surface of the perforated separating walls (30) is impinged against by under-pressure.

8. Device according to one of claims 1-7, characterised in that the device for the spraying includes an immersion tube.

## Revendications

1. Appareil pour l'enrobage d'un produit à dragéifier (22) se présentant sous forme de noyaux (26) tels que comprimés, pastilles et similaires, comportant

un récipient (12) pouvant tourner autour d'un axe (A)

un dispositif (29) pour l'arrosage des noyaux (26) avec une suspension utilisée pour dragéifier pendant le mouvement des noyaux (26) dans le récipient (12) et

un dispositif d'aspiration (24) pour évacuer de l'air et de la poussière de dragées à travers au moins une partie du produit à dragéifier (22)

l'axe de rotation (A) du récipient (12) faisant un angle avec l'horizontale tel que le produit à dragéifier soit soumis à un mouvement de balancement tridimensionnel, au cours duquel le produit en mouvement ascendant (50) se trouve en moyenne à une plus grande distance de l'axe (A) que le produit en mouvement descendant (52), caractérisé en ce que

le dispositif d'évacuation (24) comprend une ou plusieurs parois (30) de séparation perforées qui sont disposées à l'intérieur du récipient (12) de telle façon qu'elles soient débordées pendant le mouvement rotatif du récipient (12) par le produit en mouvement descendant (52) et

l'évacuation de l'air derrière les parois (30) de séparation est commandée de telle façon que les parties des parois (30) de séparation perforées qui momentanément ne sont pas en contact avec le produit à dragéifier (22) ne soient pratiquement pas soumises à la diminution de la pression,

de sorte qu'une grande partie de l'air s'écoule à travers le produit en mouvement descendant (52).

2. Appareil selon la revendication 1, caractérisé en ce que la forme du récipient (12), l'angle d'inclinaison de l'axe de rotation (A) et la quantité de remplissage réglementaire du récipient (12) sont accordés entre eux de telle façon que l'axe de rotation (A) ne traverse pas le produit à dragéifier (22).

3. Appareil selon la revendication 1 ou 2, caractérisé en ce que l'axe de rotation (A) du récipient (12) présente un angle d'inclinaison entre 20 et 40° par rapport à l'horizontale.

4. Appareil selon l'une quelconque des revendications 1 à 3, caractérisé en ce que les parois de séparation (30) perforées sont fixées à proximité de l'axe de rotation (A) de façon à ne pas pouvoir pivoter par rapport au récipient (12), de sorte qu'elles suivent avec le récipient (12) un mouvement en sens contraire au produit en mouvement descendant (52) et en ce que derrière les parois de séparation (30) perforées se trouvent des parois de retenue (62) pour régler l'évacuation de l'air.

5. Appareil selon l'une quelconque des revendications 1 à 4, caractérisé en ce que les parois de séparation (30) perforées se présentent essentiellement sous forme d'un tronc de cône autour de l'axe de rotation (A) du récipient (12), la circonférence inférieure (U) du tronc de cône sur la paroi intérieure du récipient (12) ayant la forme d'un cercle autour de l'axe (A) et le dispositif d'aspiration (24) comprenant un tube (38) également coaxial vis-à-vis de l'axe de rotation (A), ce tube étant en communication avec un tube d'aspiration (44) passant au travers de l'ouverture (48) du récipient.

6. Appareil selon la revendication 5, caractérisé en ce que la génératrice des parois de séparation (30) perforées disposées en tronc de cône fait un angle β compris entre 60 et 75° avec l'axe de rotation (A) et en ce que le diamètre (U) de la circonférence inférieure (32) du tronc de cône est égal à une fraction comprise entre 35 et 60% du diamètre (D) du récipient (12).

7. Dispositif selon l'une quelconque des revendications 3 à 6, caractérisé en ce que le récipient (12) utilisé pour dragéifier se présente en forme d'oignon, l'axe de rotation (A) forme un angle α d'environ 30° avec l'horizontale et l'évacuation de l'air derrière les parois de séparation (30) est commandée de telle façon qu'à tout moment la moitié environ de l'aire des parois de séparation (30) perforées soit soumise à une pression diminuée.

8. Dispositif selon l'une quelconque des revendications 1 à 7, caractérisé en ce que le dispositif d'arrosage comporte un tube plongeur.

Fig. 1

Fig. 2

Fig. 3